# EUROPÄISCHE PATENTSCHRIFT

(11) **EP 3 221 025 B1**
(45) Veröffentlichungstag und Bekanntmachung des Hinweises auf die Patenterteilung: **29.09.2021**
(21) Anmeldenummer: 15794200.4
(22) Anmeldetag: 13.11.2015
(51) Int. Cl.: F02M 37/28, F02M 37/30, F02M 37/42, B01D 29/58, B01D 29/21, B01D 35/18, B01D 36/00

(54) **REINSEITIG WASSERABSCHEIDENDES FILTERELEMENT MIT BAJONETTVERBINDUNG SOWIE KRAFTSTOFFFILTER MIT EINEM SOLCHEN FILTERELEMENT**
CLEAN-SIDE WATER-SEPARATING FILTER ELEMENT HAVING BAYONET CONNECTION, AND FUEL FILTER HAVING A FILTER ELEMENT OF THIS TYPE
ÉLÉMENT FILTRE SÉPARANT DE L'EAU CÔTÉ PUR ET COMPRENANT UNE LIAISON À BAÏONNETTE ET FILTRE À CARBURANT COMPRENANT UN ÉLÉMENT FILTRE DE CE TYPE

(30) Priorität: 20.11.2014 DE 102014017120
(43) Veröffentlichungstag der Anmeldung: 27.09.2017
(73) Patentinhaber: MANN+HUMMEL GmbH, 71636 Ludwigsburg (DE)
(72) Erfinder: GOEDECKE, Marco, 71665 Vaihingen (DE); BEYERLIN, Holger, 71292 Friolzheim (DE); KRAFT, Gunther, 71642 Ludwigsburg (DE); WILDERMUTH, Andreas, 71672 Marbach (DE)
(74) Vertreter: Mann + Hummel Intellectual Property
(86) Internationale Anmeldenummer: PCT/EP2015/076610
(87) Internationale Veröffentlichungsnummer: WO 2016/079028

(56) Entgegenhaltungen:
- WO-A1-2013/083309
- DE-A1-102010 016 497
- US-A1- 2008 245 719
- None

## Beschreibung

### Technisches Gebiet

Die Erfindung betrifft ein Filterelement für einen Kraftstofffilter eines Kraftfahrzeugs. Die Erfindung betrifft weiterhin einen Kraftstofffilter mit einem solchen Filterelement.

### Stand der Technik

Ein Filterelement zum Filtern von Kraftstoff eines Kraftfahrzeugs ist aus der DE 10 2012 000 876 B3 bekannt geworden. Das bekannte Filterelement ist hängend in einem Filtergehäuse angeordnet. Zur Verbindung des Filterelements mit dem Filtergehäuse ist eine Bajonettverbindung vorgesehen.

Aus der EP 1 638 664 B1 ist ein Filterelement bekannt geworden, das über Rasthaken an einem Deckel eines Filtergehäuses befestigbar ist.

Weiterhin offenbart die US 2004/0154975 A1 einen Flüssigkeitsfilter mit einem Filterelement, das im Deckel des Flüssigkeitsfilters verrastbar ist.

Darüber hinaus ist aus der DE 196 44 647 A1 ein Ölfilter bekannt geworden. Der Ölfilter weist einen Befestigungsflansch und einen Deckel auf. Der Deckel ist auf den Befestigungsflansch aufschraubbar. Ein Filterelement des Ölfilters ist am Befestigungsflansch verrastet.

EP 2 070 575 A1 offenbart ein Filterelement, das mittels einer Bajonettverbindung an einem Deckel eines Filtergehäuses befestigbar ist. Der Deckel ist auf einen Filtergehäusekörper des Filtergehäuses aufschraubbar. Hierdurch wird eine stehende Montage des Filterelements ermöglicht.

Aus der US 2011/0147297 A1 ist ein wasserabscheidender Kraftstofffilter mit einem Filterelement und mit einem Filtergehäuse bekannt geworden, wobei das Filterelement über eine Bajonettverbindung mit dem Filtergehäuse verbindbar ist.

EP 2 335 796 A1 offenbart einen Ölfilter mit einem verschließbaren Auslass. Ein Filterelement des Ölfilters ist über Führungsstege in ein Filtergehäuse des Ölfilters einsetzbar.

Aus der WO 2011/127920 A1 ist ein Filter mit einem Vorfilter und einem Hauptfilter bekannt geworden. Der Filter weist einen Deckel auf, der über Konturen mit dem Vorfilter oder dem Hauptfilter verbindbar ist.

Schließlich offenbart die US 2008/0190839 A1 einen Flüssigkeitsfilter für Kraftfahrzeuge, der ein Filterelement aufweist, das durch eine Schraubbewegung an einem Deckel des Flüssigkeitsfilters lösbar befestigbar ist.

WO 2013/083309 A offenbart einen Kraftstofffilter mit einer Bajonettverbindung. Bei den bekannten Kraftstofffiltern kommt es oftmals ungewollt zu einem Übertritt von ungefiltertem Kraftstoff auf der Rohseite in den Wassersammelraum des Kraftstofffilters.

### Offenbarung der Erfindung

Der Erfindung liegt daher die Aufgabe zugrunde, ein reinseitig wasserabscheidendes Filterelement und einen Kraftstofffilter zu schaffen, das/der einen Übertritt von ungefiltertem Kraftstoff in den Wassersammelraum verhindert.

Diese Aufgabe wird durch ein Filterelement mit den Merkmalen des Anspruchs 1 sowie durch einen Kraftstofffilter mit den Merkmalen des Anspruchs 6 gelöst. Die Unteransprüche geben zweckmäßige Weiterbildungen an.

Die erfindungsgemäße Aufgabe wird somit gelöst durch ein reinseitig wasserabscheidendes Filterelement für einen Kraftstofffilter eines Kraftfahrzeugs, wobei das Filterelement in ein Filtergehäuse des Kraftstofffilters einsetzbar ist und folgende Merkmale aufweist:
a) ein Partikelfiltermedium, das zwischen einer ersten Endplatte und einer zweiten Endplatte des Filterelements angeordnet ist;
b) einen Bajonettvorsprung im Bereich der ersten Endplatte, der durch Drehung des Filterelements um seine Filterelementlängsachse zum Hintergriff einer Bajonettaufnahme des Filtergehäuses ausgebildet ist;
c) ein Innendichtungselement zur Trennung einer Rohseite von einem Wassersammelraum des Kraftstofffilters, wobei das Innendichtungselement im Bereich der zweiten Endplatte angeordnet ist.

Durch den Bajonettvorsprung wird das Filterelement während des Öffnens des Filtergehäuses im Rahmen eines Filterelementwechsels über eine Bajonettverbindung sicher an einem Teil des Filtergehäuses gehalten werden. Das Innendichtungselement gewährleistet eine Trennung der Rohseite des Kraftstofffilters von dessen Wassersammelraum. Eine Kontamination des abgeschiedenen Wassers durch Kraftstoff von der Rohseite des Kraftstofffilters wird dadurch im Betrieb des Kraftstofffilters sicher vermieden. Insgesamt ist das Filterelement somit sehr umweltschonend ausgebildet.

Die erste Endplatte ist insbesondere im Betriebszustand des Filterelements die obere Endplatte, die zweite Endplatte im Betriebszustand die untere Endplatte des Filterelements.

Bevorzugt ist das Innendichtungselement in Form eines Radialdichtungselements, insbesondere in Form eines O-Rings, ausgebildet. Dies ermöglicht eine konstruktiv besonders einfache Ausbildung des Filterelements.

Besonders bevorzugt ist das Innendichtungselement radial nach außen weisend an der zweiten Endplatte angeordnet.

Die Dichtheit des Innendichtungselements ist besonders hoch, wenn das Innendichtungselement in einer Innendichtungselementnut angeordnet ist, deren Öffnung radial von der Filterelementlängsachse weg weist. Durch die von der Filterelementlängsachse weg weisende Innendichtungselementnut liegt das Innendichtungselement an einer Innenseite des Filtergehäuses im Betrieb des Kraftstofffilters an.

Die Herstellung des Filterelements wird vereinfacht, wenn es axialsymmetrisch zu seiner Filterelementlängsachse ausgebildet ist.

Ein schneller Wasserabfluss aus dem Filterelement wird erreicht, wenn das Filterelement eine Wasseraustragungsöffnung, insbesondere einen Sedimentationsspalt, aufweist.

In bevorzugter Ausgestaltung der Erfindung weist das Filterelement ein Endabscheidersieb und/oder ein Koaleszermedium zwischen Partikelfiltermedium und Endabscheidersieb auf. Dies ermöglicht eine besonders hohe Wasserabscheidungsrate des Filterelements.

Die erfindungsgemäße Aufgabe wird weiterhin gelöst durch einen Kraftstofffilter mit einem Filtergehäuse und einem zuvor beschriebenen Filterelement, wobei das Filtergehäuse einen Deckel aufweist, der auf einen Filtergehäusekörper aufschraubbar ist und das Filtergehäuse innenseitig eine Bajonettaufnahme aufweist, die derart ausgebildet ist, dass der Bajonettvorsprung in die Bajonettaufnahme eingreift, wenn der Deckel vom Filtergehäusekörper abgeschraubt wird.

Bajonettvorsprung und Bajonettaufnahme bilden eine Bajonettverbindung. In der Bajonettverbindung weisen Bajonettvorsprung und Bajonettaufnahme einen Reibschluss zueinander auf. Der Reibungskoeffizient dieses Reibschlusses ist kleiner als der Reibungskoeffizient zwischen dem Innendichtungselement und einem Wandabschnitt des Filtergehäuses, an dem das Innendichtungselement anliegt. Mit anderen Worten ist die Reibung zwischen Innendichtungselement und Filtergehäuse größer als die Reibung zwischen Bajonettvorsprung und Bajonettaufnahme. Hierdurch greift der Bajonettvorsprung in die Bajonettaufnahme ein, wenn der Deckel vom Filtergehäuse abgeschraubt wird und öffnet die Bajonettverbindung, wenn der Deckel auf das Filtergehäuse aufgeschraubt wird.

Das Filterelement kann stehend im Filtergehäuse angeordnet sein. In diesem Fall ist die Bajonettaufnahme im Deckel vorgesehen. Bei aufgeschraubtem Deckel ist das Filterelement vom Deckel gelöst. Bei abgeschraubtem Deckel ist das Filterelement mit dem Deckel verbunden. Das Filterelement ist somit beim Filterelementwechsel mitsamt dem Deckel vom Filtergehäusekörper abnehmbar.

Alternativ dazu kann die Bajonettaufnahme im Filtergehäusekörper angeordnet oder ausgebildet sein, wobei das Filterelement über die Bajonettaufnahme hängend im Filtergehäuse anordenbar ist. Der Filtergehäusekörper ist fest mit einer Kraftstoffzuleitung und einer Kraftstoffableitung verbunden. Bei abgeschraubtem Deckel ist das Filterelement mit dem Filtergehäusekörper verbunden. Bei aufgeschraubtem Deckel ist das Filterelement vom Filtergehäusekörper gelöst. Schwingungen während des Betriebs des Kraftstofffilters werden somit nicht vom Filtergehäusekörper auf das Filterelement übertragen. Eine hängende Montage des Filterelements hat weiterhin den Vorteil, dass beim Trennen des Deckels vom Filtergehäusekörper im Deckel enthaltene Flüssigkeit darin gehalten wird und sich nicht mit anderen Flüssigkeiten vermischt oder in die Umgebung entweicht.

In besonders bevorzugter Ausgestaltung der Erfindung weist das Filtergehäuse ein Außendichtungselement zwischen Deckel und Filtergehäusekörper auf. Die Verbindung zwischen Filtergehäusekörper und Deckel wird durch das Außendichtungselement zur Umgebung hin abgedichtet, um ein Entweichen von Kraftstoff von der Rohseite des Kraftstofffilters in die Umwelt sicher zu vermeiden.

Das Außendichtungselement kann in Form eines Radialdichtungselements, insbesondere in Form eines O-Rings, ausgebildet sein, wobei das Außendichtungselement in einer Außendichtungselementnut angeordnet ist. Hierdurch wird eine hohe Dichtheit der Rohseite des Kraftstofffilters zur Umgebung erzielt.

Vorzugsweise ist das Außendichtungselement im Deckel angeordnet. Das Außendichtungselement ist dann im Verschleißfall leicht zugänglich und austauschbar.

In weiterer Ausgestaltung der Erfindung sind das Außendichtungselement und das Innendichtungselement derart am Kraftstofffilter angeordnet, dass beim Abschrauben des Deckels zunächst die Dichtung des Innendichtungselements und anschließend die Dichtung des Außendichtungselements aufgehoben werden. Mit anderen Worten weist das Außendichtungselement parallel zur Filterelementlängsachse bei der Demontage des Deckels zeitlich länger einen Dichtsitz auf als das Innendichtungselement. Hierdurch wird beim Abschrauben des Deckels Kraftstoff von der Rohseite über die aufgehobene Dichtung des Innendichtungselements abgeleitet und erst danach die Verbindung des Filtergehäusekörpers zur Umgebung über die aufgehobene Dichtung des Außendichtungselements hergestellt. Diese Maßnahme verhindert zuverlässig ein Entweichen von Kraftstoff von der Rohseite des Kraftstofffilters in die Umgebung. Die beschriebene Maßnahme ist besonders vorteilhaft bei einer hängenden Montage des Filterelements, da der Kraftstoff in diesem Fall bei einem Abschrauben des Deckels in den Deckel abgeleitet und dort gesammelt wird.

Das Filtergehäuse, insbesondere der Deckel des Filtergehäuses, weist vorzugsweise eine reversibel offen- und verschließbare Ablassvorrichtung zum Auslass von abgeschiedenem Wasser auf. Zum Auslass von aus dem Kraftstoff abgetrenntem Wasser muss somit nicht der Deckel vom Filtergehäusekörper abgeschraubt werden, wodurch die Gefahr einer Kontamination der Umgebung mit Kraftstoff bzw. die Gefahr einer Vermischung von Flüssigkeiten zwischen Rohseite und Wassersammelraum im Kraftstofffilter weiter reduziert wird.

Beim Service kann somit abgeschiedenes Wasser und gefilterter Kraftstoff über die Ablassvorrichtung ausgelassen werden. Danach kann die Ablassvorrichtung geschlossen und der Deckel abgeschraubt werden, sodass der ungefilterte Kraftstoff in den Deckel fließen und entnommen werden kann. Anschließend kann das Filterelement ausgetauscht werden. Zusammenfassend kann somit vor dem Filterelementwechsel Wasser (zusammen mit bereits gereinigtem Kraftstoff) getrennt von rohseitigem Kraftstoff aus dem Kraftstofffilter abgelassen werden.

Der Kraftstofffilter ist konstruktiv besonders einfach ausgestaltet und dadurch kostengünstig produzierbar, wenn die Ablassvorrichtung in Form eines Stopfens ausgebildet ist.

In weiterer bevorzugter Ausgestaltung der Erfindung weist das Filtergehäuse zueinander beabstandete Wasserstandselektroden zur Messung des Wasserstandes im Filtergehäuse auf. Die Wasserstandselektroden ragen dabei vorzugsweise in einen oberen Teil eines Wassersammelraums des Kraftstofffilters. Durch die Wasserstandselektroden wird das Überschreiten einer maximalen Wasserfüllhöhe detektiert und in Form eines Servicesignals ausgegeben.

Besonders bevorzugt sind die Wasserstandselektroden an einer Wasserstandselektrodensäule angeordnet oder ausgebildet, wobei die Wasserstandselektrodensäule einen Kraftstoffabfluss aufweist. Hierdurch wird eine besonders kompakte Anordnung von Wasserstandselektroden und Kraftstoffabfluss aus dem Filterelement ermöglicht.

Die Wasserstandselektrodensäule ist vorzugsweise reversibel lösbar mit dem Filterelement verbunden, sodass die Wasserstandselektrodensäule bei einem Filterelementwechsel nicht ersetzt werden muss. Hierdurch können Kosten und Müll vermindert werden.

Das Filtergehäuse weist bevorzugt eine Heizelektrode zur Erwärmung des Kraftstoffes auf. Die Heizelektrode ist dabei bevorzugt im Bereich der Bajonettaufnahme an das Filtergehäuse geschweißt. Der Kraftstofffilter wird dadurch konstruktiv besonders einfach und kostengünstig ausgebildet.

Weiter bevorzugt weist der Bajonettvorsprung des Filterelements radial nach innen. Hierdurch werden scharfe, nach außen gerichtete Kanten am Filterelement vermieden.

Die radialen Abmessungen des Bajonettvorsprungs sind vorzugsweise größer als die radialen Abmessungen im Öffnungsquerschnitt des Deckels. Mit anderen Worten ist der radiale äußere Durchmesser des Bajonettvorsprungs vorzugsweise größer als der radiale Innendurchmesser des Deckels im Bereich seiner Öffnung. Hierdurch wird ein falscher Einbau des Filterelements in das Filtergehäuse verhindert.

Weiter bevorzugt weist der im Betrieb untere Bereich des Filterelements eine Entnahmehilfe zum leichten Lösen der Bajonettverbindung auf.

In weiterer bevorzugter Ausgestaltung der Erfindung ist die Wasserstandselektrodensäule reversibel lösbar mit dem Filtergehäuse verbunden, sodass eine defekte Wasserstandselektrodensäule ausgetauscht werden kann, ohne das vollständige Filtergehäuse ersetzen zu müssen.

### Kurze Beschreibung der Zeichnungen

Weitere Merkmale und Vorteile der Erfindung ergeben sich aus der nachfolgenden detaillierten Beschreibung eines Ausführungsbeispiels der Erfindung, anhand der Figuren der Zeichnung, die erfindungswesentliche Einzelheiten zeigt, sowie aus den Ansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Es zeigen:
- Fig. 1: eine perspektivische, teilweise geschnittene Ansicht eines Kraftstofffilters;
- Fig. 2: eine geschnittene Seitenansicht des Kraftstofffilters aus Fig. 1; und
- Fig. 3: eine geschnittene Seitenansicht des Kraftstofffilters gemäß Fig. 2 mit teilweise abgeschraubtem Deckel.

### Ausführungsformen der Erfindung

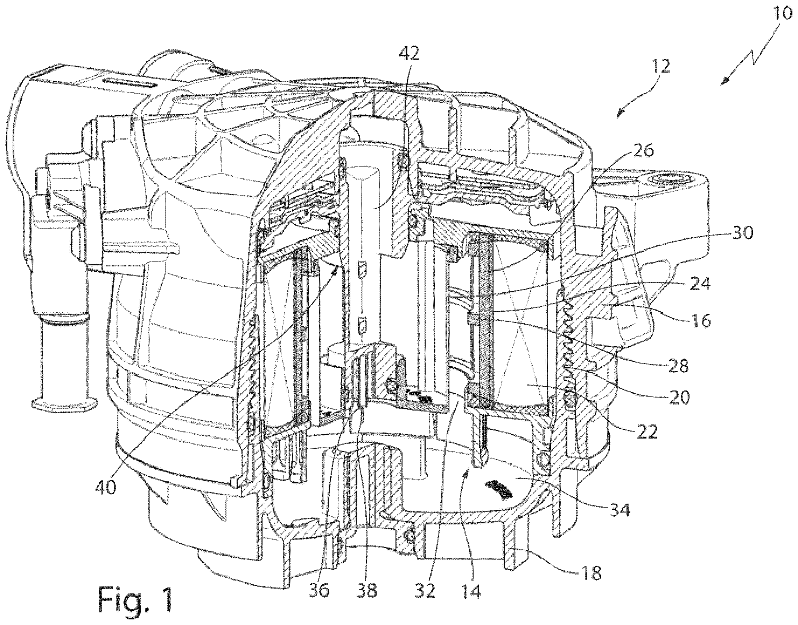

Fig. 1 zeigt einen Kraftstofffilter 10 mit einem Filtergehäuse 12 und einem im Filtergehäuse 12 installierten Filterelement 14. Das Filtergehäuse 12 weist einen Filtergehäusekörper 16 und einen Deckel 18 auf. Der Deckel 18 ist über ein Gewinde 20 auf den Filtergehäusekörper 16 aufgeschraubt. Zum Austausch des Filterelements 14 wird der Deckel 18 vom Filtergehäusekörper 16 abgeschraubt.

Das Filterelement 14 ist schmutzfilternd und mehrstufig wasserabscheidend ausgebildet, um hohe Anforderungen an die Reinheit und Wasserfreiheit des gefilterten Kraftstoffs erfüllen zu können. Das Filterelement 14 weist hierzu ein Partikelfiltermedium 22 auf. Das Partikelfiltermedium 22 ist mehrfach sternförmig gefaltet, um eine große Oberfläche bereitzustellen. Dem Fluss des Kraftstoffs folgend weist das Filterelement 14 ein an das Partikelfiltermedium 22 anschließendes erstes Koaleszermedium 24 in Form eines Vlieses auf. Am ersten Koaleszermedium 24 bilden sich Wassertröpfchen aus. Auf das erste Koaleszermedium 24 folgt ein gröberes zweites Koaleszermedium 26 zur Vergrößerung der Wassertröpfchen. Das zweite Koaleszermedium 26 liegt innenseitig an einem Stützkörper 28 an. Zwischen dem Stützkörper 28 und einem Endabscheidersieb 30 ist ein Sedimentationsspalt 32 ausgebildet. Das Endabscheidersieb 30 fungiert als "Prallplatte" zur Abscheidung der Wassertröpfchen, die, der Schwerkraft folgend, über den Sedimentationsspalt 32 in einen Wassersammelraum 34 des Filtergehäuses 12 fließen.

Im Filtergehäuse 12 sind zueinander beabstandete Wasserstandselektroden 36, 38 vorgesehen, um das Erreichen der maximalen Füllhöhe des Wassers im Wassersammelraum 34 zu detektieren. Die Wasserstandselektroden 36, 38 sind in einer Wasserstandselektrodensäule 40 angeordnet. Die Wasserstandselektrodensäule 40 weist einen Kraftstoffabfluss 42 auf.

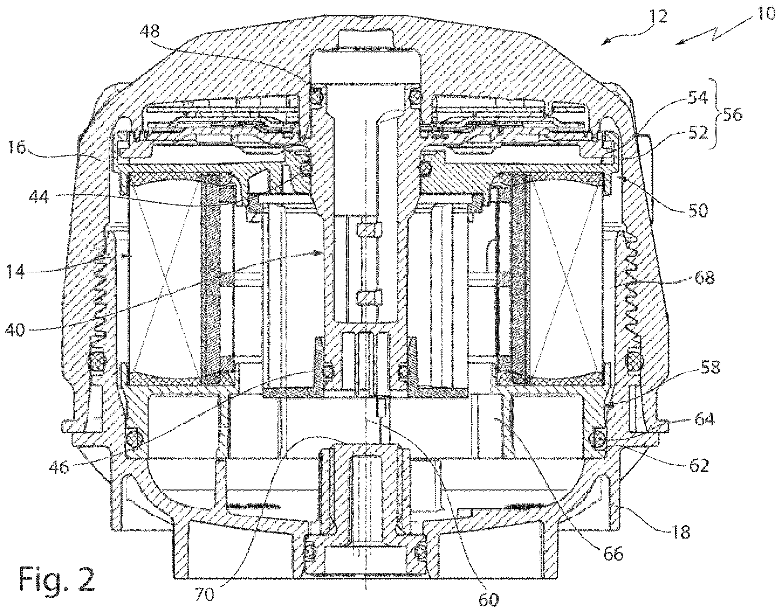

Fig. 2 zeigt den Kraftstofffilter 10 in einer geschnittenen Seitenansicht. Aus Fig. 2 ist ersichtlich, dass die Wasserstandselektrodensäule 40 reversibel lösbar mit dem Filterelement 14 verbunden ist. Die Wasserstandselektrodensäule 40 ist dabei über Dichtringe 44, 46 an das Filterelement 14 gekoppelt. Weiterhin ist die Wasserstandselektrodensäule 40 reversibel lösbar mit dem Filtergehäusekörper 16 verbunden. Die Wasserstandselektrodensäule 40 ist über einen Dichtring 48 an den Filtergehäusekörper 16 gekoppelt. Die Dichtringe 44, 46, 48 sind jeweils als Radialdichtringe ausgebildet.

Das Filterelement 14 ist hängend am Filtergehäusekörper 16 montiert. Zur Verbindung des Filterelements 14 mit dem Filtergehäusekörper 16 ist an einer ersten Endplatte 50 des Filterelements 14 ein Bajonettvorsprung 52 vorgesehen. Der Bajonettvorsprung 52 ist zum Hintergriff einer Bajonettaufnahme 54 des Filtergehäusekörpers 16 ausgebildet. Der Bajonettvorsprung 52 und die Bajonettaufnahme 54 bilden eine Bajonettverbindung 56.

In Fig. 2 ist der Deckel 18 vollständig auf den Filtergehäusekörper 16 aufgeschraubt bzw. teilweise in diesen eingeschraubt. In diesem Zustand ist die Bajonettverbindung 56 geöffnet, d. h. das Filterelement 14 ist schwingungsentkoppelt vom Filtergehäusekörper 16.

Das Filterelement 14 weist eine zweite Endplatte 58 auf. Die zweite Endplatte 58 ist der ersten Endplatte 50 in Richtung einer Filterelementlängsachse 60 entgegengesetzt. Die zweite Endplatte 58 weist eine Innendichtungselementnut 62 auf, deren Öffnung in radialer Richtung von der Filterelementlängsachse 60 weg weist. In der Innendichtungselementnut 62 ist ein Innendichtungselement 64 angeordnet. Das Innendichtungselement 64 ist in Form eines Radialdichtungselements, genauer gesagt in Form eines O-Rings, ausgebildet. Das Innendichtungselement 64 trennt eine Reinseite 66 von einer Rohseite 68 des Kraftstofffilters 10. Das Innendichtungselement 64 verhindert einen Kraftstoffübertritt von der Rohseite 68 auf die Reinseite 66 bzw. in den Wassersammelraum 34.

Der Kraftstofffilter 10 weist eine Ablassvorrichtung 70 in Form eines Stopfens auf. Über die Ablassvorrichtung 70 kann abgeschiedenes Wasser (zusammen mit gereinigtem Kraftstoff) abgelassen werden. Nach dem Ablassen des Wassers kann die Ablassvorrichtung 70 geschlossen werden, um anschließend - und getrennt von Wasser und gereinigtem Kraftstoff - ungereinigten Kraftstoff durch Abschrauben des Deckels 18 abzulassen und das Filterelement 14 zu wechseln.

Das Innendichtungselement liegt unter Reibschluss an einem Wandabschnitt des Deckels 18 an. Die Dichtung zwischen dem Innendichtungselement 64 und des am Innendichtungselement 64 anliegenden Wandabschnitts des Deckels 18 hat dabei einen größeren Reibungskoeffizienten als die Bajonettverbindung 56. Beim Abschrauben des Deckels 18 wird somit das Filterelement 14 mit dem Deckel 18 mitgedreht. Dabei schließt die Bajonettverbindung 56. Wenn die Bajonettverbindung 56 geschlossen ist, sperrt die Bajonettverbindung 56 eine weitere Drehung des Filterelements 14 relativ zum Filtergehäusekörper 16. Bei weiterem Drehen des Deckels 18 (Abschrauben des Deckels 18) erfolgt vielmehr eine Drehung des Deckels 18 relativ zum Filterelement 14. Der Deckel 18 wird also bei mit dem Filtergehäusekörper 16 verbundenem Filterelement 14 vom Filtergehäusekörper 16 abgeschraubt.

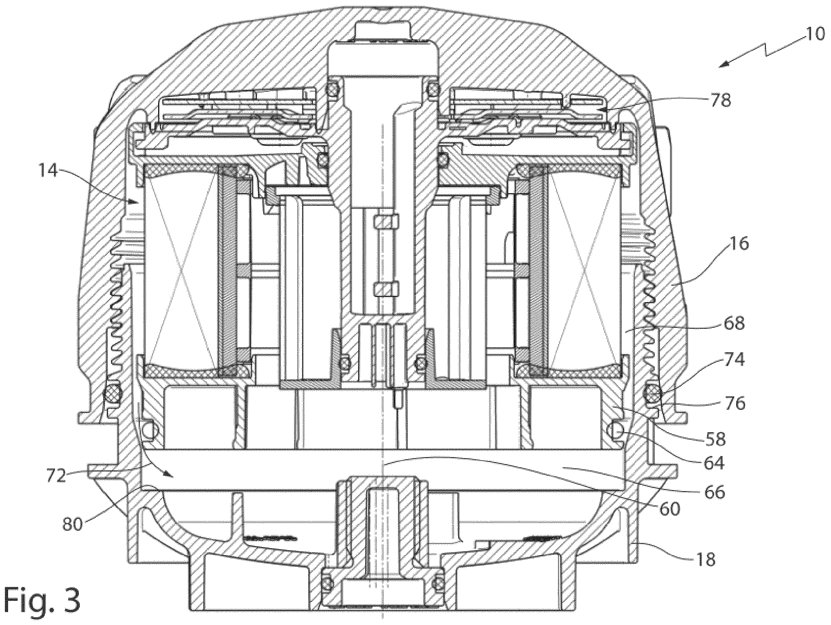

Fig. 3 zeigt den Kraftstofffilter 10 bei teilweise abgeschraubtem Deckel 18. Das Innendichtungselement 64 ist außer Eingriff mit dem Deckel 18. Hierdurch kann ungereinigter Kraftstoff von der Rohseite 68 in Richtung eines Pfeils 72 in den Deckel 18 abfließen. Der ungereinigte Kraftstoff kann somit getrennt von Wasser und gereinigtem Kraftstoff vor dem Filterelementwechsel im Deckel 18 gesammelt werden. Das Austreten von Kraftstoff in die Umwelt wird dabei durch ein Außendichtungselement 74 verhindert. Die Dichtung zwischen Deckel 18 und Filtergehäusekörper 16 durch das Außendichtungselement 74 ist noch geschlossen, wenn die Dichtung zwischen Filterelement 14 und Deckel 18 durch das Innendichtungselement 64 bereits aufgehoben ist. Hierdurch wird der ausschließliche Kraftstoffabfluss in den Deckel 18 beim Abschrauben des Deckels 18 sicher gewährleistet.

Das Außendichtungselement 74 ist in Form eines Radialdichtungselements, hier in Form eines O-Rings, ausgebildet. Das Außendichtungselement 74 ist in einer Außendichtungselementnut 76 angeordnet.

Zur Erwärmung des Kraftstoffs, insbesondere zum Filtern von Dieselkraftstoff, ist im Kraftstofffilter 10 eine Heizelektrode 78 vorgesehen.

Zusammenfassend betrifft die Erfindung ein zumindest einstufig wasserabscheidendes Filterelement für einen Kraftstofffilter. Das Filterelement weist in Richtung seiner Filterelementlängsachse einenends einen Bajonettvorsprung zur Befestigung des Filterelements in einem Filterelementgehäuse des Kraftstofffilters auf. Anderenends weist das Filterelement ein Innendichtungselement auf. Das Innendichtungselement ermöglicht eine Trennung von Rohseite und Wassersammelraum des Kraftstofffilters. Das Filterelementgehäuse weist einen Filterelementkörper und einen Deckel auf, deren Verbindung bevorzugt über ein Außendichtungselement abgedichtet ist. Außendichtungselement und Innendichtungselement sind vorzugsweise derart angeordnet, dass bei einer Trennung des Deckels vom Filterelementkörper zunächst die Dichtung des Innendichtungselements und dann die Dichtung des Außendichtungselements aufgehoben wird.

## Patentansprüche

1. Reinseitig wasserabscheidendes Filterelement (14) für einen Kraftstofffilter (10) eines Kraftfahrzeugs, wobei das Filterelement (14) in ein Filtergehäuse (12) des Kraftstofffilters (10) einsetzbar ist und folgende Merkmale aufweist:
a) ein Partikelfiltermedium (22), das zwischen einer ersten Endplatte (50) und einer zweiten Endplatte (58) des Filterelements (14) angeordnet ist;
b) einen Bajonettvorsprung (52) im Bereich der ersten Endplatte (50), der durch Drehung des Filterelements (14) um seine Filterelementlängsachse (60) zum Hintergriff einer Bajonettaufnahme (54) des Filtergehäuses (12) ausgebildet ist;
c) ein Innendichtungselement (64) zur Trennung einer Rohseite (68) von einem Wassersammelraum (34) des Kraftstofffilters (10), wobei das Innendichtungselement (64) im Bereich der zweiten Endplatte (58) angeordnet ist und wobei in der Bajonettverbindung Bajonettvorsprung (52) und Bajonettaufnahme (54) einen Reibschluss zueinander aufweisen, wobei der Reibungskoeffizient dieses Reibschlusses kleiner ist als der Reibungskoeffizient zwischen dem Innendichtungselement (64) und einem Wandabschnitt des Filtergehäuses (12), an dem das Innendichtungselement (64) anliegt.

2. Filterelement nach Anspruch 1, bei dem das Innendichtungselement (64) in Form eines Radialdichtungselements, insbesondere in Form eines O-Rings, ausgebildet ist.

3. Filterelement nach Anspruch 2, bei dem das Innendichtungselement in einer Innendichtungselementnut (62) angeordnet ist, deren Öffnung radial von der Filterelementlängsachse (60) weg weist.

4. Filterelement nach einem der vorhergehenden Ansprüche, bei dem das Filterelement (14) eine Wasseraustragungsöffnung, insbesondere einen Sedimentationsspalt (32), aufweist.

5. Filterelement nach einem der vorhergehenden Ansprüche, bei dem das Filterelement (14) ein Endabscheidersieb (30) und/oder ein Koaleszermedium (24, 26) zwischen Partikelfiltermedium (22) und Endabscheidersieb (30) aufweist.

6. Kraftstofffilter (10) mit einem Filtergehäuse (12) und einem Filterelement (14) nach einem der vorhergehenden Ansprüche, wobei das Filtergehäuse (12) einen Deckel (18) aufweist, der auf einen Filtergehäusekörper (16) aufschraubbar ist und das Filtergehäuse (12) innenseitig eine Bajonettaufnahme (54) aufweist, die derart ausgebildet ist, dass der Bajonettvorsprung (52) in die Bajonettaufnahme (54) eingreift, wenn der Deckel (18) vom Filtergehäusekörper (16) abgeschraubt wird, wobei in der Bajonettverbindung Bajonettvorsprung (52) und Bajonettaufnahme (54) einen Reibschluss zueinander aufweisen, wobei der Reibungskoeffizient dieses Reibschlusses kleiner ist als der Reibungskoeffizient zwischen einem Innendichtungselement (64) des Filterelements (14) und einem Wandabschnitt des Filtergehäuses (12), an dem das Innendichtungselement (64) anliegt.

7. Kraftstofffilter nach Anspruch 6, bei dem die Bajonettaufnahme (54) im Filtergehäusekörper (16) angeordnet oder ausgebildet ist, wobei das Filterelement (14) über die Bajonettaufnahme (54) hängend im Filtergehäuse (12) anordenbar ist.

8. Kraftstofffilter nach Anspruch 6 oder 7, bei dem das Filtergehäuse (12) ein Außendichtungselement (74) zwischen Deckel (18) und Filtergehäusekörper (16) aufweist.

9. Kraftstofffilter nach Anspruch 8, bei dem das Außendichtungselement (74) in Form eines Radialdichtungselements, insbesondere in Form eines O-Rings, ausgebildet ist, wobei das Außendichtungselement (74) in einer Außendichtungselementnut (76) angeordnet ist.

10. Kraftstofffilter nach Anspruch 8 oder 9, bei dem das Außendichtungselement (74) im Deckel (18) angeordnet ist.

11. Kraftstofffilter nach einem der Ansprüche 8 bis 10, bei dem das Außendichtungselement (74) und das Innendichtungselement (64) derart am Kraftstofffilter (10) angeordnet sind, dass beim Abschrauben des Deckels (18) zunächst die Dichtung des Innendichtungselements (64) und anschließend die Dichtung des Außendichtungselements (74) aufgehoben werden.

12. Kraftstofffilter nach einem der Ansprüche 6 bis 11, bei dem das Filtergehäuse (12) eine reversibel öffen- und verschließbare Ablassvorrichtung (70) zum Auslass von abgeschiedenem Wasser aufweist.

13. Kraftstofffilter nach Anspruch 12, bei dem die Ablassvorrichtung (70) in Form eines Stopfens ausgebildet ist.

14. Kraftstofffilter nach einem der Ansprüche 6 bis 13, bei dem das Filtergehäuse (12) zueinander beabstandete Wasserstandselektroden (36, 38) zur Messung des Wasserstandes im Filtergehäuse (12) aufweist.

15. Kraftstofffilter nach Anspruch 14, bei dem die Wasserstandselektroden (36, 38) an einer Wasserstandselektrodensäule (40) angeordnet oder ausgebildet sind, wobei die Wasserstandselektrodensäule (40) einen Kraftstoffabfluss (42) aufweist.

## Claims

1. Clean-sided water separating filter element (14) for a fuel filter (10) of a motor vehicle, wherein the filter element (14) is insertable into a filter housing (12) of the fuel filter (10) and features the following characteristics:
a) a particulate filter medium (22) disposed between a first end plate (50) and a second end plate (58) of the filter element (14);
b) a bayonet projection (52) in the area of the first end plate (50), said bayonet projection being designed for gripping behind a bayonet holder (54) of the filter housing (12) by rotating the filter element (14) around its longitudinal axis of the filter element (60),
c) an inner sealing element (64) for separating a raw side (68) from a water-collecting chamber (34) of the fuel filter (10), wherein the inner sealing element (64) is disposed in the area of the second end plate (58) and wherein the bayonet projection (52) and the bayonet holder (54) feature a mutual friction locking in the bayonet connection, wherein the coefficient of friction of this friction locking is smaller than the coefficient of friction between the inner sealing element (64) and a wall section of the filter housing (12) against which the inner sealing element (64) abuts.

2. Filter element according to claim 1, wherein the inner sealing element (64) is designed in the shape of a radial sealing element, in particular in the shape of an O-ring.

3. Filter element according to claim 2, wherein the inner sealing element is disposed in an inner sealing element groove (62), the opening of which faces radially away from the longitudinal axis of the filter element (60).

4. Filter element according to one of the preceding claims, wherein the filter element (14) features a water discharge opening, in particular a sedimentation gap (32).

5. Filter element according to one of the preceding claims, wherein the filter element (14) features a final separator sieve (30) and/or a coalescer medium (24, 26) between the particulate filter medium (22) and the final separator sieve (30).

6. Fuel filter (10) having a filter housing (12) and a filter element (14) according to one of the preceding claims, wherein the filter housing (12) features a cover (18) which can be screwed onto a filter housing body (16) and the filter housing (12) features on its interior side a bayonet holder (54) which is designed in such a way that the bayonet projection (52) engages into the bayonet holder (54) when the cover (18) is screwed off the filter housing body (16).

7. Fuel filter according to claim 6, wherein the bayonet holder (54) is disposed or designed in the filter housing body (16), wherein the filter element (14) can be suspended in the filter housing (12) via the bayonet holder (54).

8. Fuel filter according to claim 6 or 7, wherein the filter housing (12) features an outer sealing element (74) between cover (18) and filter housing body (16).

9. Fuel filter according to claim 8, wherein the outer sealing element (74) is designed in the shape of a radial sealing element, in particular in the shape of an O-ring, wherein the outer sealing element (74) is disposed in an outer sealing element groove (76).

10. Fuel filter according to claim 8 or 9, wherein the outer sealing element (74) is disposed in the cover (18).

11. Fuel filter according to one of the claims 8 to 10, wherein the outer sealing element (74) and the inner sealing element (64) are disposed at the fuel filter (10) in such a way that, when the cover (18) is unscrewed, at first the seal of the inner sealing element (64) and then the seal of the outer sealing element (74) are loosened.

12. Fuel filter according to one of the claims 6 to 11, wherein the filter housing (12) features a reversibly openable and closable discharge apparatus (70) for discharging separated water.

13. Fuel filter according to claim 12, wherein the discharge apparatus (70) is designed in the shape of a plug.

14. Fuel filter according to one of the claims 6 to 13, wherein the filter housing (12) features water level electrodes (36, 38) mutually spaced for measuring the water level in the filter housing (12).

15. Fuel filter according to claim 14, wherein the water level electrodes (36, 38) are disposed or realized on a water level electrode column (40), wherein the water level electrode column (40) features a fuel outflow (42).

## Revendications

1. Élément filtrant (14) séparant l'eau du côté pur pour un filtre à carburant (10) d'un véhicule automobile, dans lequel l'élément filtrant (14) peut être inséré dans un boîtier de filtre (12) du filtre à carburant (10) et présente les caractéristiques suivantes:
a) un milieu filtrant particulaire (22) disposé entre une première plaque d'extrémité (50) et une seconde plaque d'extrémité (58) de l'élément filtrant (14);
b) une saillie à baïonnette (52) dans la région de la première plaque d'extrémité (50), ladite saillie à baïonnette étant réalisée par rotation de l'élément filtrant (14) autour de son axe longitudinal de l'élément filtrant (60) pour une prise par l'arrière d'un logement à baïonnette (54) du boîtier de filtre (12);
c) un élément d'étanchéité intérieur (64) pour séparer un côté brut (68) d'un collecteur d'eau (34) du filtre à carburant (10), dans lequel l'élément d'étanchéité intérieur (64) est disposé dans la région de la seconde plaque d'extrémité (58) et dans lequel la saillie à baïonnette (52) et le logement à baïonnette (54) présentent un assemblage par friction l'un avec l'autre dans le raccord à baïonnette, dans lequel le coefficient de friction de cet assemblage par friction est plus petit que le coefficient de friction entre l'élément d'étanchéité intérieur (64) et une section de paroi du boîtier de filtre (12) sur lequel repose l'élément d'étanchéité intérieur (64).

2. Élément filtrant selon la revendication 1, dans lequel l'élément d'étanchéité intérieur (64) est réalisé sous forme d'un élément d'étanchéité radial, notamment sous forme d'un joint torique.

3. Élément filtrant selon la revendication 2, dans lequel l'élément d'étanchéité intérieur est disposé dans une rainure d'élément d'étanchéité intérieure (62) dont l'ouverture pointe radialement à l'opposé de l'axe longitudinal de l'élément filtrant (60).

4. Élément filtrant selon l'une des revendications précédentes, dans lequel l'élément filtrant (14) présente une ouverture d'évacuation d'eau, notamment une fente de sédimentation (32).

5. Élément filtrant selon l'une des revendications précédentes, dans lequel l'élément filtrant (14) présente un tamis de séparation final (30) et/ou un milieu coalescent (24, 26) entre le milieu filtrant particulaire (22) et le tamis de séparation final (30).

6. Filtre à carburant (10) ayant un boîtier de filtre (12) et un élément filtrant (14) selon l'une des revendications précédentes, dans lequel le boîtier de filtre (12) présente un couvercle (18) qui peut être vissé sur un corps de boîtier de filtre (16) et le boîtier de filtre (12) présente un logement à baïonnette (54) sur sa face intérieure qui est conçu de telle manière que la saillie à baïonnette (52) s'engage dans le logement à baïonnette (54) lorsque le couvercle (18) est dévissé du corps de boîtier de filtre (16).

7. Filtre à carburant selon la revendication 6, dans lequel le logement à baïonnette (54) est disposé ou réalisé dans le corps de boîtier de filtre (16), dans lequel l'élément filtrant (14) peut être disposé de manière suspendue dans le boîtier de filtre (12) par l'intermédiaire du logement à baïonnette (54).

8. Filtre à carburant selon la revendication 6 ou 7, dans lequel le boîtier de filtre (12) présente un élément d'étanchéité extérieur (74) entre le couvercle (18) et le corps de boîtier de filtre (16).

9. Filtre à carburant selon la revendication 8, dans lequel l'élément d'étanchéité extérieur (74) est réalisé sous forme d'un élément d'étanchéité radial, notamment sous forme d'un joint torique, dans lequel l'élément d'étanchéité extérieur (74) est disposé dans une rainure d'élément d'étanchéité extérieure (76).

10. Filtre à carburant selon la revendication 8 ou 9, dans lequel l'élément d'étanchéité extérieur (74) est disposé dans le couvercle (18).

11. Filtre à carburant selon l'une quelconque des revendications 8 à 10, dans lequel l'élément d'étanchéité extérieur (74) et l'élément d'étanchéité intérieur (64) sont disposés sur le filtre à carburant (10) de telle manière que, lorsque le couvercle (18) est dévissé, d'abord le joint d'étanchéité de l'élément d'étanchéité intérieur (64) et ensuite le joint d'étanchéité de l'élément d'étanchéité extérieur (74) sont retirés.

12. Filtre à carburant selon l'une quelconque des revendications 6 à 11, dans lequel le boîtier de filtre (12) présente un dispositif d'évacuation (70) pouvant être ouvert et obturé réversiblement pour évacuer l'eau séparée.

13. Filtre à carburant selon la revendication 12, dans lequel le dispositif d'évacuation (70) est réalisé sous forme d'un bouchon.

14. Filtre à carburant selon l'une quelconque des revendications 6 à 13, dans lequel le boîtier de filtre (12) présente des électrodes de niveau d'eau (36, 38) espacés l'une de l'autre pour mesurer le niveau d'eau dans le boîtier de filtre (12).

15. Filtre à carburant selon la revendication 14, dans lequel les électrodes de niveau d'eau (36, 38) sont disposées ou réalisées sur une colonne d'électrode de niveau d'eau (40), dans lequel la colonne d'électrode de niveau d'eau (40) présente une évacuation de carburant (42).
